# EUROPEAN PATENT SPECIFICATION

(11) **EP 1 785 808 B1**
(45) Date of publication and mention of the grant of the patent: **01.10.2014**
(21) Application number: 05110611.0
(22) Date of filing: 10.11.2005
(51) Int. Cl.: G06F 1/32, H04W 52/02

(54) **System and method for activating an electronic device**
System und Verfahren zur Aktivierung einer elektronischen Vorrichtung
Système et procédé pour activer un dispositif électronique

(43) Date of publication of application: 16.05.2007
(73) Proprietor: BlackBerry Limited, Waterloo, ON N2K 0A7 (CA)
(72) Inventor: Orr, Kevin, Elmira N3B 3C9 (CA); Fyke, Steven Henry, Waterloo N2J 4T3 (CA); Mak-Fan, David, Waterloo N2K 4B1 (CA)
(74) Representative: Moore, Barry

(56) References cited:
- US-A- 5 656 804
- US-A- 5 996 080
- US-B1- 6 734 845

## Description

The invention described herein relates to a system and method for selectively activating electronic elements in an electronic device. In particular, the invention described herein relates to activating the device from a low-power state by: detecting a notable movement of the device, then determining whether an input device has been activated, then selectively activating or re-activating components in the device.

Current wireless handheld mobile communication devices perform a variety of functions to enable mobile users to stay current with information and communications, such as e-mail, corporate data and organizer information while they are away from their desks. A wireless connection to a server allows a mobile communication device to receive updates to previously received information and communications. The handheld devices optimally are lightweight, compact and have long battery life. In order to conserve power consumption of the devices, "sleep" modes are provided which selectively either slow down the clocking rate of the components, selectively de-activate components, or both. However, when in a sleep mode, a re-activation signal can be generated after a certain event (e.g. movement of the device, receipt of a message, etc.) which is used to re-activate the device. Such events can be detected by electronic sensors in the device. However, such sensors need to be continually powered, thereby draining power from the battery.

Processing a re-activation signal also has issues. Prior art devices have fed the re-activation signal to an interrupt request (IRQ) line of a microprocessor in the device. A power-up routine operating on the microprocessor monitors for the activation of the IRQ line and when it is received, the routine causes the microprocessor to power up. The technique can be inefficient for power management, as once the IRQ line is activated, the microprocessor is fully re-activated, thereby draining a significant amount of power. False positive IRQ signals will cause unnecessary re-activations of the microprocessor. US5996080 discloses a portable data capture terminal that has a low power mode. Fig. 8 and col. 10, lines 6 to 55 of that document indicate that the powering up is achieved in two stages: (i) enablement by sensing motion and thereafter (ii) an enablement based on orientation. Furthermore, an image capture unit is signalled if a touch image is determined to be international.

There is a need for a system and method which addresses deficiencies in the prior art.

### General

In a first aspect of the invention an activation circuit for an electronic device is provided, comprising: a first motion sensor which generates a first activation signal upon detection of an initial movement of said device; a second motion sensor which is activated upon receiving said activation signal from said first motion sensor; an input device; a monitoring circuit connected to said input device and an output associated with said second motion sensor, said monitoring circuit being arranged to provide power to said input device when said second motion sensor detects a notable movement of said electronic device and to selectively generate a second activation signal used to activate said electronic device to a higher power state after receiving a notable signal from said input device within a predetermined length of time; and a threshold circuit connected to said second motion sensor to filter insignificant signals produced by said second motion sensor from said monitoring circuit.

The activation circuit may further comprise a microprocessor; a wake-up software routine operating on the microprocessor to selectively bring the electronic device to the higher power state upon receipt of the second activation signal; and a timing module to initiate a timing window after detection of the notable movement.

Therein, the input device may be activated during said timing window and if a sufficient signal from said input device is detected by said monitoring circuit during said timing window and said monitoring circuit is arranged to generate said second activation signal.

In the circuit, the second activation signal may be provided to an interrupt line of the microprocessor which is associated with the wake-up software routine.

In the circuit, a slow clock signal may be generated by the microprocessor indicating when the microprocessor is in a lower power state.

In the circuit, the second activation signal may also be used to reset the monitoring circuit to allow it to process subsequent signals from the second motion sensor.

In the circuit, the input device may be activated by a power signal generated by the monitoring circuit.

In the circuit, the first motion sensor may be a low -g microelectrical mechanical system 'MEMS' accelerometer.

In the circuit, the input device may detect movement of a finger by a sensor.

In the circuit, if the timing window elapses, the power signal for the input device may be removed.

The circuit may further comprise an additional input device connected to the monitoring circuit, providing additional signals to the monitoring circuit for evaluation for generation of the second activation signal.

In a second aspect of the invention a method for activating an electronic device is provided, comprising: monitoring for an initial motion of said device utilizing signals from a low-g micro-electromechanical system 'MEMS' accelerometer; upon detection of said initial motion, activating a second accelerometer using a signal from said low-g MEMS accelerometer, to detect a further motion; activating an input device upon detection of said further motion if said further motion surpasses a predefined threshold; waiting for a notable signal from said input device for a predetermined length of time; and if said notable signal is received within said predetermined length of time, generating an activation signal for activating said electronic device to a higher power state.

In the method, the step of detecting the motion comprises utilizing signals from a low-g MEMS accelerometer to activate a second accelerometer. Further, the threshold may be set by a threshold circuit having an output from the second accelerometer as an input to the threshold circuit.

In the method, the step of waiting for the notable signal may utilize a slow clock signal to track the predetermined length of time.

The method may further comprise deactivating the input device if the predetermined length of time elapses without receiving the notable signal from the input device.

In the method, upon generation of the activation signal, it may be provided to a microprocessor associated with the device; and the microprocessor may react to receipt of the activation signal by transiting to a higher power state.

In an embodiment of the invention, an electronic device comprising the activation circuit is provided. The device comprises: a microprocessor and the activation circuit of the invention.

The device may further comprise a wake-up software routine operating on the microprocessor to selectively bring the electronic device to the higher power state upon receipt of the second activation signal; and a timing module to initiate a timing window after detecting the notable movement. The input device may be activated during the timing window and if a sufficient input signal is provided on the input device during the timing window, the second activation signal may be generated.

In other aspects various combinations of sets and subsets of the above aspects are provided.

### BRIEF DESCRIPTION OF THE DRAWINGS

The invention will now be described, by way of example only, with reference to the accompanying drawings, in which:
Fig. 1 : is a schematic representation of an electronic device having a device activation system in accordance with an embodiment;
Fig. 2 : is a block diagram of certain internal components and the device activation system in the device in Fig. 1;
Fig. 3 : is a block diagram of the device activation system and its associated elements of the embodiment of Fig. 1;and
Fig. 4 : is a state diagram of a device activation routine executed by the embodiment of Fig. 1.

### DESCRIPTION OF PREFERRED EMBODIMENT

The description which follows and the embodiments described therein are provided by way of illustration of an example or examples of particular embodiments of the principles of the present invention. These examples are provided for the purposes of explanation and not limitation of those principles and of the invention. In the description which follows, like parts are marked throughout the specification and the drawings with the same respective reference numerals.

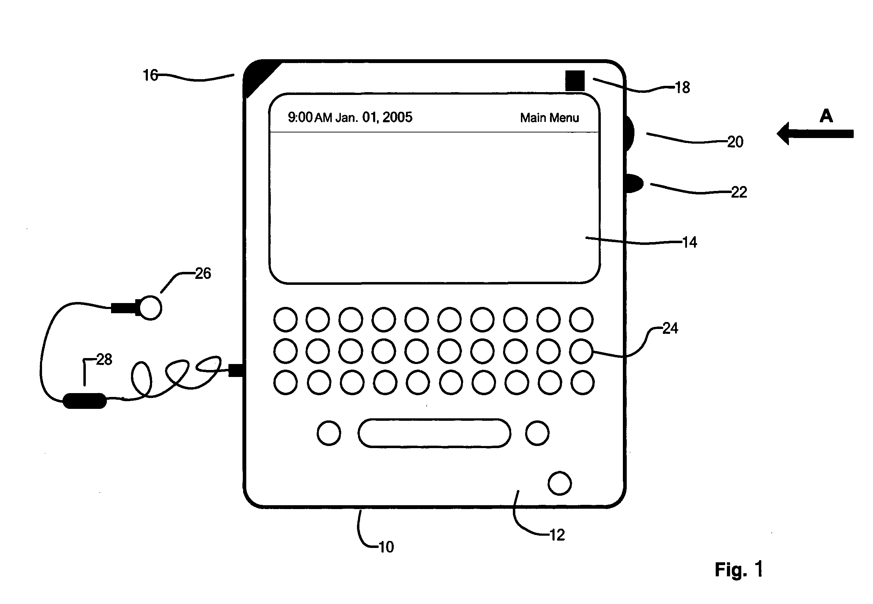

Referring to Fig. 1, an electronic device for receiving electronic communications in accordance with an embodiment of the invention is indicated generally at 10. In the present embodiment, electronic device 10 is based on a computing platform having functionality of an enhanced personal digital assistant with cellphone and e-mail features. It is, however, to be understood that electronic device 10 can be based on construction design and functionality of other electronic devices, such as smart telephones, desktop computers pagers or laptops having telephony equipment. In a present embodiment, electronic device 10 includes a housing 12, an LCD 14, speaker 16, an LED indicator 19, a trackwheel 20, an ESC ("escape") key 22, keypad 24, a telephone headset comprised of an ear bud 26 and a microphone 28. Trackwheel 20 and ESC key 22 can be inwardly depressed along the path of arrow "A" as a means to provide additional input to device 10.

It will be understood that housing 12 can be made from any suitable material as will occur to those of skill in the art and may be suitably formed to house and hold all components of device 10.

Device 10 is operable to conduct wireless telephone calls, using any known wireless phone system such as a Global System for Mobile Communications ("GSM") system, Code Division Multiple Access ("CDMA") system, Cellular Digital Packet Data ("CDPD") system and Time Division Multiple Access ("TDMA") system. Other wireless phone systems can include Bluetooth and the many forms of 802.11 wireless broadband, like 802.11a, 802.11b, 802.11g, etc. that support voice. Other embodiments include Voice over IP (VoIP) type streaming data communications that can simulate circuit switched phone calls. Ear bud 26 can be used to listen to phone calls and other sound messages and microphone 28 can be used to speak into and input sound messages to device 10.

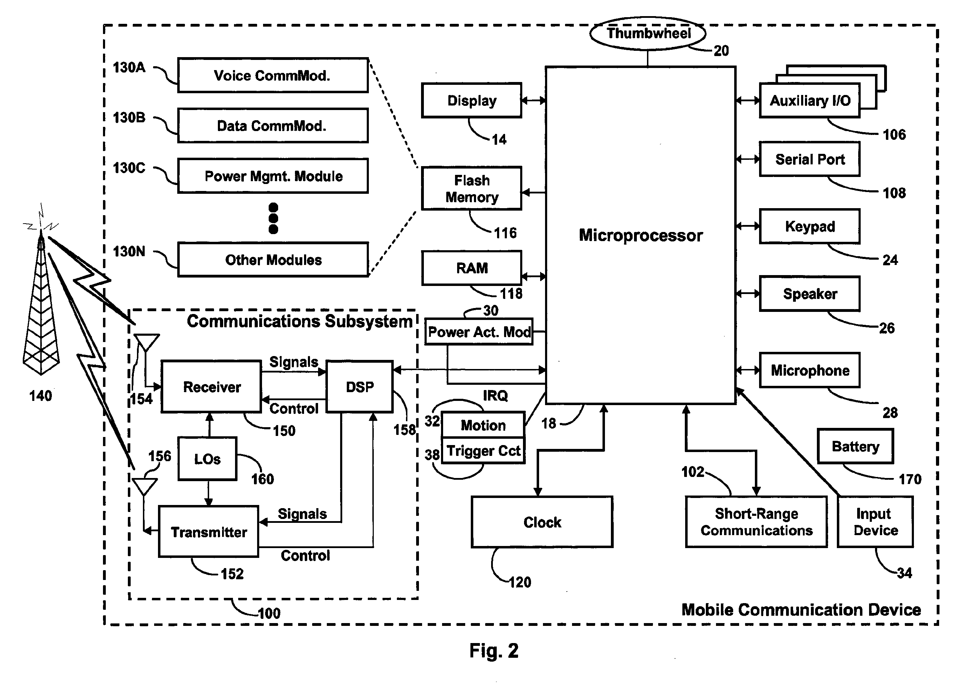

Referring to Fig. 2, functional components of device 10 are provided. The functional components are generally electronic, structural or electro-mechanical devices. In particular, microprocessor 18 is provided to control and receive almost all data, transmissions, inputs and outputs related to device 10. Microprocessor 18 is shown schematically as coupled to keypad 24, power activation module 30, motion sensor 32, input device 34 and other internal devices. Microprocessor 18 controls the operation of the power activation module (PAM) 30, as well as the overall operation of the device 10, in response to activation of device 10. Exemplary microprocessors for microprocessor 18 include Data 950 (trade-mark) series microprocessors and the 6200 series microprocessors, all available from Intel Corporation. Microprocessor 18 is connected to other elements in device 10 through a series of electrical connections to its various input and output pins. Microprocessor 18 has an IRQ input line which allows it to receive signals from various devices, including power activation module 30. Appropriate interrupt firmware is provided which receives and reacts to the signals detected on the IRQ line.

In addition to the microprocessor 18, other internal devices of the device 10 are shown schematically in Fig. 2. These include: communication sub-system 100; short-range communication sub-system 102; keypad 24; display 14; auxiliary I/O devices 106; serial port 108; speaker 16; microphone port 112 for microphone 28; flash memory 116 (which provides persistent storage of data); random access memory (RAM) 118; clock 120 and other device sub-systems (not shown). The device 10 is preferably a two-way radio frequency (RF) communication device having voice and data communication capabilities. In addition, device 10 preferably has the capability to communicate with other computer systems via the Internet.

Operating system software executed by the microprocessor 18 is preferably stored in a computer readable medium, such as flash memory 116, but may be stored in other types of memory devices, such as read only memory (ROM) or similar storage element. In addition, system software, specific device applications, or parts thereof, may be temporarily loaded into a volatile store, such as RAM 118. Communication signals received by the mobile device may also be stored to RAM 118.

Microprocessor 18, in addition to its operating system functions, enables execution of software applications on device 10. A set of software applications 130 that control basic device operations, such as a voice communication module 130A and a data communication module 130B, may be installed on the device 10 during manufacture or downloaded thereafter. Power management module (PMM) 130C may also be installed on device 10 during manufacture. PMM 130C monitors usage of device 10 and selectively controls power to the components. PMM 130C may also control, in part, PAM 30. As well, additional software modules, illustrated as software module 130N, which may be for instance a personal information manager (PIM) application, may be installed during manufacture or downloaded thereafter into device 10. PIM application is preferably capable of organizing and managing data items, such as e-mail messages, calendar events, voice mail messages, appointments, and task items. Data associated with each application can be stored in flash memory 116.

Communication functions, including data and voice communications, are performed through the communication sub-system 100 and the short-range communication sub-system 102. Collectively, sub-system 102 and sub-system 100 provide the signal-level interface for all communication technologies processed by device 10. Various applications 130 provide the operational controls to further process and log the communications. Communication sub-system 100 includes receiver 150, transmitter 152 and one or more antennas, illustrated as receive antenna 154 and transmit antenna 156. In addition, communication sub-system 100 also includes processing module, such as digital signal processor (DSP) 158 and local oscillators (LOs) 160. The specific design and implementation of communication sub-system 100 is dependent upon the communication network in which device 10 is intended to operate. For example, communication sub-system 100 of the device 10 may be designed to operate with the Mobitex (trade-mark), DataTAC (trade-mark) or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communication Service (PCS), Global System for Mobile Communication (GSM), etc. Other types of data and voice (telephonic) networks, both separate and integrated, may also be utilized with device 10. In any event, communication sub-system 100 provides device 10 with the capability of communicating with other devices using various communication technologies, including instant messaging (IM) systems, text messaging (TM) systems and short message service (SMS) systems.

In addition to processing communication signals, DSP 158 provides control of receiver 150 and transmitter 152. For example, gains applied to communication signals in receiver 150 and transmitter 152 may be adaptively controlled through automatic gain control algorithms implemented in DSP 158.

In a data communication mode, a received signal, such as a text message or web page download, is processed by the communication sub-system 100 and is provided as an input to microprocessor 18. The received signal is then further processed by microprocessor 18 which can then generate an output to display 14 or to an auxiliary I/O device 106. A device user may also compose data items, such as e-mail messages, using keypad 24, thumbwheel 20 and/or some other auxiliary I/O device 106, such as a touchpad, a rocker switch, a separate thumbwheel or some other input device. The composed data items may then be transmitted over communication network 140 via communication sub-system 100. Sub-system 100 may also detect when it is out of communication range for its remote systems.

In a voice communication mode, overall operation of device 10 is substantially similar to the data communication mode, except that received signals are output to speaker 16, and signals for transmission are generated by microphone 28. Alternative voice or audio I/O sub-systems, such as a voice message recording sub-system, may also be implemented on device 10. In addition, display 14 may also be utilized in voice communication mode, for example, to display the identity of a calling party, the duration of a voice call, or other voice call related information.

Short-range communication sub-system 102 enables communication between device 10 and other proximate systems or devices, which need not necessarily be similar devices. For example, the short-range communication sub-system may include an infrared device and associated circuits and components, or a Bluetooth (trade-mark) communication module to provide for communication with similarly-enabled systems and devices.

Powering the entire electronics of the mobile handheld communication device is power source 170. Preferably, the power source 170 includes one or more batteries. More preferably, the power source 170 is a single battery pack, especially a rechargeable battery pack. A power switch (not shown) provides an "on/off" switch for device 10. Upon activation of the power switch an application 130 is initiated to turn on device 10. Upon deactivation of the power switch, an application 130 is initiated to turn off device 10. Power to device 10 may also be controlled by other devices and by software applications 130.

It will be appreciated that device 10 can cycle through a normal operating mode to a low-power mode and back to a normal operating mode. In the normal operating mode for device 10, PMM 130C monitors the current state of usage of device 10. When device 10 is detected as being inactive (e.g. no activation of from keypad 24 or no messages received) after a predetermined amount of time (e.g. 5 minutes), then the PMM 130C selectively shuts down an element or places an element of device 10 into a lower power consumption mode. For example, microprocessor 18 may be placed in a "slow clock" mode, wherein the clocking signal for the microprocessor is slowed, thereby causing device 10 to operate slower and conserve battery power. Alternatively, display 14 may be turned off. One or more elements can be selectively powered down. When device 10 is in a low-power mode, device 10 can subsequently be re-activated into the normal power or higher-power mode.

For a low-power mode, the embodiment utilizes the following elements to manage the re-activation of device 10: power activation module 30, motion sensor 32, input device 34, microprocessor 18 and software operating on microprocessor 18. In particular, the elements collectively monitor the state of activation of device 10, monitor signals received from motion sensor 32 and input device 34, then selectively activate components of device 10. Further detail on these elements is provided below.

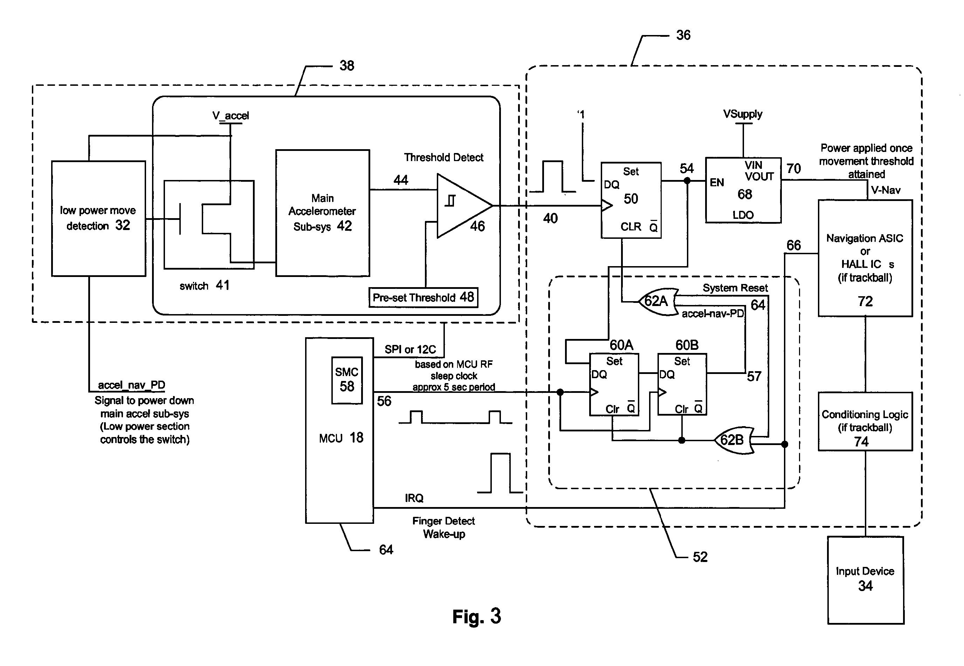

Turning now to Fig. 3, power activation module 30 comprises two main sections: (1) trigger circuit 38 for use with motion sensor 32; and (2) monitoring circuit 36 for use with input device 34. Briefly, a two-stage approach is used to re-activate device 10. First, trigger circuit 38 is used with motion sensor 32 to detect an initial movement or intent to use device 10. Collectively, trigger circuit 38 and motion sensor 32 may be considered to be a motion sensor circuit. Once the trigger circuit 38 generates its activation signal, monitoring circuit 36 is activated with input device 34 to detect any further indication that the device is meant to be reactivated. Once monitoring circuit 36 determines that device 10 is meant to be re-activated, it sends a re-activation signal to microprocessor 18.

Motion sensor 32 is preferably a motion detection device which utilizes less power in a quiescent state than components in trigger circuit 38 and components in monitoring circuit 36. For example, a low-g MEMS (micro-electromechanical system) accelerometer may be used for motion sensor 32. Further, the accelerometer may be of almost any type, including a capacitive, piezoelectric, piezoresistive, or a gas-based accelerometer. An exemplary low-g MEMS accelerometer is a LIS3L02AQ tri-axis analog accelerometer, available from STMicroelectronics of Geneva, Switzerland. Accelerometers sense and convert an acceleration detected from a motion (e.g. tilt, inertial, or vibration) or gravity into an electrical signal (producing a corresponding change in output) and are available in one, two or three axis configurations. Accelerometers may produce digital or analog output signals.

In Fig. 3, for trigger circuit 38, when accelerometer (also noted by reference number 32) is moved, e.g. by a movement of device 10, the output signal generated by accelerometer 32 is provided to switch 41. If the signal is sufficient to activate switch 41, a power signal from switch 41 is provided to main sub-system 42 to activate it. In the embodiment, sub-system 42 provides a second motion sensor which is activated by the trigger signal from switch 41. As such, when a further movement is detected, the output of the second motion sensor in sub-system circuit 42 is provided to threshold comparator 46. Comparator 46 compares the signal 44 against a threshold value 48. If the size of signal 44 exceeds the threshold value 48, comparator 46 generates activation signal 40. Activation signal 40 represents a "true" activation signal received from sensor 32.

Circuit 38 may be implemented as a single digital device having a series of modules, which can be separately activated and de-activated. A separate "power down" input line can be associated with main sub-system 42, which would then allow any signals from sensor 32 to be provided directly to the "power down" pin, bypassing switch 41. Similarly, comparator 46 and threshold value 48 may be a second module. A "power-down" pin associated with the threshold module may be tied to the output of main sub-system 42. As such, the output of sensor 32 may be used to provide an input signal to a "power-down" pin in the device. Also, when the main sub-system 42 generates an output signal, it can activate the second module which will then conduct a comparison and generate its output signal. An exemplary integrated device is a LIS3L02DQ tri-axis accelerometer having an I2C or SPI interface, also available from STMicroelectronics. In another embodiment, any of switch 41, sub-system circuit 42, threshold register 48 and comparator 46 may not be provided in the single device.

It will be appreciated that in most instances, depending on motion sensitivities set for sensor 32 and sub-system 42, when device 10 is initially moved from rest, the signal generated by sensor 32 activates sub-system 42 and the signal generated by it is sufficient to trigger the threshold detection circuit 46, to produce signal 40. However, it is possible that the movement of accelerometer 32 is large enough to trigger switch 41 but the movement may still not be considered to be valid for the remainder of the circuit. For the example, the movement may be too small to be a true activation signal, the movement may have happened too quickly, or the movement may be deemed to be spurious.

Since a digital device typically consumes more power than an analog equivalent, it is advantageous to provide a lower current e.g. piezoelectric sensor, to first detect a movement through sensor 32 and then enable power to the digital accelerometer device to validate the movement. In such an implementation, a digital accelerometer can remain in a power-down mode until required to transition to an active state. Preferably, power to sensor 32 is continually provided. When sensor 32 is implemented as a low-power accelerometer, the draw on battery for device 10 is reduced.

To improve sensitivities of an accelerometer when it is used as motion sensor 32, its outputs can be calibrated to compensate for individual axis offset and sensitivity variations. Calibrations can also could be performed at the system level, providing end-to-end calibration. Calibrations can also be performed by collecting a large set of measurements with the device in different orientations.

It will be appreciated that other circuits using different combinations of sensors and triggering components and threshold detectors may be used to provide functionalities of sensor 32 and circuit 38.

For example, if device 10 is lying on a flat, horizontal surface, a trigger condition for the Z-axis of sensor 32 can be set to trigger after detecting a force greater than 1 g. When device 10 is picked up, two changes in velocity are detected along the Z-axis of sensor 32: first, a positive acceleration is detected (e.g. a force greater than 1 g) when device 10 is first picked up and is being raised from the surface; and second, a negative acceleration is detected as device 10 is brought to a given height above the surface and movement of device 10 slows down to hold it at that height. If sensor 32 is a digital device, it preferably produces a positive range of values, for example between 0 and 255, representing all detected up and down movements. In that example, the rest reading for sensor 32 for device 10 may be a value around 127. As such, up and down movements of device 10 would cause readings to move above and below the value of 127. If a movement in either direction is sufficient to trigger a signal in a comparator, the reading on sensor 32 would have to be outside the tolerance window of the rest reading.. It will be appreciated that the limits of 1 g can be used with a tolerance buffer to compensate for noise in the signals. A comparable analog circuit may be provided if the sensor is producing a voltage signal. In other embodiments, positive and negative values produced by sensor 32 may be analyzed.

Further in an example useful for an understanding of the invention , if sensor 32 and trigger circuit 38 would use only one accelerometer, then the output of an OR gate can be used as an activation signal 40. If sensor 32 and trigger circuit 38 use two accelerometers, then the output of the OR gate can be used to represent trigger switch 41 or a trigger signal to a Power Down pin of the second accelerometer. In such a circuit, the output of comparators can be set to be LOW when the first accelerometer detects movements in only about the 1 g range. Low-pass filtering may also be added to reduce noise and invalid signals being generated by the comparators.

In other embodiments, a single comparator can be used to perform comparisons.

In an embodiment, a specific gesture detected by sensor 32 and / or sub-system 42 may be required to activate device 10, such as a quick "snap" movement in a certain direction of device 10. or the movement of device 10 in a clockwise circular pattern. That gesture can be broken down into a series of sequential notable components. As the gesture is being executed by a user with device 10 in hand, sensor 32 and / or sub-system 42 detects each component of the gesture, and each component is analyzed to determine whether the gesture has been properly formed, thereby providing a signal to activate device 10.

In other embodiments, motion sensor 32 may be substituted with a different motion sensor device, such as a spring-loaded switch. It is preferable that the device have low quiescent power draw characteristics. Further, system notifications, time/date, or alarms may be used to trigger power to be enabled to the input sub-system indicating device reactivation. It will be further appreciated that other motion sensor circuits known in the art may be used, as appropriate.

The second section of circuit 30 provides a further check for activation inputs from additional devices. The second section includes monitoring circuit 36 which interfaces with device 34. Briefly, monitoring circuit 36 checks for signals from input device 34 and then, if deemed appropriate signals are received, additional activation signal(s) are generated. The additional activation signals can be provided to microprocessor 18 as a wake-up signal to cause microprocessor 18 to initiate a re-activation routine. Ultimately, a sufficient signal from device 34 is still needed before the wake-up signal for microprocessor 18 is generated.

Input device 34 is any device which allows the user of device 10 to provide some form of input to device 10. It can be a keypad, a touchscreen, a touchpad, a touchstrip, a trackball, a fingerprint reader, a mouse, a trackwheel, a joystick, a switch, a motion sensor, a light sensor, a microphone, an IR sensor, an accelerometer or any other input device. Preferably, input device 34 can detect movement of a finger of the user across its sensor. The description of device 10 has already noted keypad 24, trackwheel 20, ESC key 22, auxiliary I/O devices 106, microphone 28 as separate devices. However, it will be appreciated that any one of those devices are also input devices and can be used as input device 34.

For monitoring circuit 36, a system reset signal is provided after device power-up to clear the Q outputs of latches 50 and 60. After microprocessor 18 initializes, it will enter its sleep state after a period of inactivity. Its sleep state will be provisioned by a slow clock signal. A free-running TIMED_REF_CLK signal 56 is provided from microprocessor 18 based on the slow clock. The shape of signal 56 can be defined to meet different requirements. One pulse can be a short pulse generated every 5 seconds. Preferably, microprocessor 18 generates signal 56 only when it is asleep. In other embodiments, TIMED_REF_CLK signal 56 may be generated by a separate timer circuit (not shown) independently from microprocessor 18.

First, activation signal 40 is provided to latch 50. Reset circuit 52 provides a pre-condition for allowing trigger signal 54 to be generated. One condition is that microprocessor 18 be active, but in a low-power state. In the embodiment, when microprocessor 18 is in a low-power state, a slow clock signal is provisioned by the microprocessor to be able to respond to remote, radio frequency requests, user requests, alarms, etc. Typically this slow clock is provided by an external oscillator which feeds slow clock module 58. The slow clock signal has a slower clocking rate than the normal clocking signal used by microprocessor 18. The TIMED_REF_CLK signal 56 is derived from a timer which is clocked by slow clock module 58 in microprocessor 18. TIMED_REF_CLK signal 56 may have a duty cycle which has a shorter "ON" cycle compared to its "OFF" cycle. Monitoring circuit may be implemented to monitor for the edge or level of signal 56.

To process the conditions for generating trigger signal 54, time window generation and reset circuit 52 comprises a series of staged latches 60A and 60B and OR gates 62A and 62B. TIMED_REF_CLK signal 56 is fed as an input to time window generation and reset circuit 52. The output of time window generation and reset circuit 52 is provided to the CLR line of latch 50. TIMED_REF_CLK signal 56 is used as the clocking signal for latches 60A and 60B. The data line of latch 60A comes from the output of latch 50. The output of latch 60A is fed to the data line of latch 60B. The output of latch 60B is pulse 57 defined by two upward edges of TIMED_REF_CLK signal 56 and is fed to OR gate 62A.

A system reset signal 64 from microprocessor 18 is provided as a second input to OR gate 62A. The output of OR gate 62A is provided to latch 50 CLR. The output of OR gate 62B is provided to the CLR lines of gates 60A and 60B. The inputs of OR gate 62B are provided by the system reset signal 64 and the wakeup signal 66 provided by monitoring circuit 38. As such, the setting and resetting of trigger signal 54 is mainly controlled by: (1) the state of activation signal 40; (2) the state of TIMED_REF_CLK signal 56 (represented by pulse 57); (3) the state of reset signal 64; and (4) the state of the wake-up signal 66. For the case where the wake-up signal 66 is OFF (i.e. it not been activated), a state table of the signals is provided in Table A:

**Table A**

| Inputs | | | Output |
|---|---|---|---|
| Reset Signal 64 | Pulse 57 | Activation Signal 40 | Trigger Signal 54 |
| OFF | OFF | OFF | OFF |
| OFF | OFF | ON | OFF |
| OFF | ON | OFF | OFF |
| OFF | ON | ON | ON |
| ON | OFF | OFF | OFF |
| ON | OFF | ON | OFF |
| ON | ON | OFF | OFF |

As such, it will be seen that the only instance where trigger signal 54 is generated as an ON signal if the reset signal 64 is OFF (i.e. not active), the duty cycle of the slow clock is ON (i.e. active), and the activation signal is ON and the signal of pulse 57 is in its open window. The system reset signal 64 may be provided by microprocessor 18 or any other device. Generally, it is generated in situations where a large failure has occurred, required the reset of device 10.

In other embodiments, the above noted state diagram may be implemented in other circuits, PLDs, PLAs, software, firmware or other systems known in the art. Further, other types of trigger circuits employing more or less input signals, as required, may be provided in other embodiments. Also, in other embodiments different condition signals may be used from one or more different devices in evaluating whether to generate trigger signal 54.

In monitoring circuit 36, trigger signal 54 is provided to enable voltage regulator 68 to control the current of the output signal. If trigger signal 54 is ON, then output signal 70 of voltage regulator 68 will be HIGH, i.e. the output voltage of the regulator. The output signal 70 is used to activate any necessary power circuits for input device 34. It will be seen that use of the first and second sections provides a staged power-up routine for device 34. In another embodiment, Navigation ASIC/module 72 is provisioned with a Power Down pin, which must be asserted before module 72 is powered. In certain configurations, use of a Power Down pin for module 72 would allow voltage regulator 68 to be eliminated.

With device 34 activated, circuit 36 can monitor and evaluate any signals received from of device 34. These functions are provided by navigation ASIC 72, which is also activated by output signal 70. Navigation circuit 72 receives signals generated by input device 34 and has logical circuits (not shown) which evaluates the signals. In a comparable fashion for signals from motion sensor 32, navigation circuit 72 may evaluate the signals and may require them to be of a certain direction, force, duration, speed or any combination of those characteristics to be considered a signal which is meant to turn on device 10. Again, a specific gesture signal may be required, such as the movement of input device 34 in a circular fashion. Navigation circuit 72 may also process any signals from input device 34 when device 10 is operating in a full-power mode.

Similar to an embodiment having modules in a single device for motion detector 32 and circuit 38, circuit 36 may be implemented as a monolithic digital device having one, two or more modules. Each module may have a separate power down pin, providing individual control over power over individual modules. As such, an output from ASIC 72 may be used to control a power down pin for conditioning logic circuit 74. Similarly reset circuit 52 may have its output tied to power down pins of latch 50.

Pulse 57 defines a timed window controlled by TIMED_REF_CLK signal 56, 60A and 60B. The window may be used to selectively activate navigation circuit 72, allowing it to monitor for an input signal from device 34. Power is provided to circuit 72 when the window is open. If no sufficient signal from input device 34 is received in the window, power to navigation circuit 72 and / or device 34 may be reduced or turned off. The window may be any duration, such as 5, 10, 20, or 30 seconds. If after activation from signal 54, navigation circuit 72 does not respond via an IRQ within the window period derived by TIMED_REF_CLK, then latch 60B will be clocked by the second occurrence of TIMED_REF_CLK which will place a HIGH on the CLR of latch 50 and disable power to navigation circuits. If a higher power accelerometer is used (separate from the low power move detect 32) or if the accelerometer contains a higher power section that may be powered down independently (example: digital section), then the accelerometer may be placed in a power down mode as well.

When navigation circuit 72 determines that an acceptable signal has been received from input device 34, circuit 72 generates wake-up signal 66. As noted earlier, the wake-up signal is provided to OR gate 62B of reset circuit 52. It is also provided to the IRQ line of microprocessor 18. An interrupt routine is provided for microprocessor 18 which is activated upon the receipt of the wakeup signal 66 on the IRQ line. The microprocessor , once awakened by the IRQ signal, will disable the TIMED_REF_CLK signal 56 to prevent powering down of navigation circuit 72 via CLR of 50. When the system returns back to a sleep state because of user inactivity, the TIMED_REF_CLK is re-enabled. Alternatively, microprocessor 18 may provide an output signal (once awakened) that feeds OR gate 62B input instead of signal 66. Microprocessor 18 would set this signal HIGH until ready to re-enter sleep state to inhibit the disabling of the navigation ASIC/module.

The logic and technologies for navigation circuit 72 may be implemented as an ASIC, a PLD, discrete elements, a PLA or any other technologies known in the art. It will be appreciated that various different implementations can be made for navigation circuit 72, depending on the re-activation requirements made for device 10. For example, navigation circuit 72 may monitor for signals from one or more input devices 34. For specific types of input devices 34, such as a trackball, navigation circuit 72 may be implemented as a Hall effect circuit. Further, a specific signal sequence may be required from one or more input devices 34 in order for navigation circuit 72 to generate wake-up signal 66. Alternatively, the re-activation requirements may be more modest. For example, signal 66 may be generated after any signal is detected from device 34. Conditioning module 74 also can be provided between input device 34 and navigation circuit 72 to debounce or filter any deemed spurious signals generated by input device 34.

When wake-up signal 66 is provided to an IRQ line of microprocessor 18, microprocessor 18 activates the associated interrupt routine. The interrupt routine contains instructions to re-activate microprocessor 18 and initiate other processes and routines to move device 10 from its current power-up state to another, higher-power up state. The routine is encoded as software or firmware and may be stored in an appropriate memory location in memory 116. The next power state may be a full-power state or it may be an enhanced power state. Further progression up or down from the next power state may be dependent on further detection of use of device 10 by circuit 30 or an additional circuit.

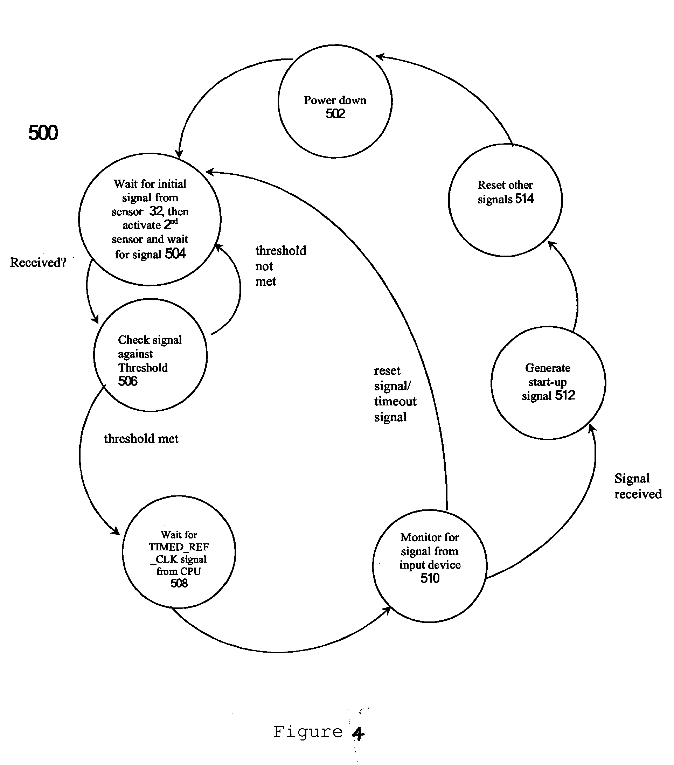

Referring to Fig. 4, state diagram 500 shows a progression of states passed during monitoring and execution of a power-up sequence routine for device 10. Initial state 502 is entered when device 10 enters a lower-power state. The system immediately transfers to Wait for Signal from Sensor state 504, which monitors for any initial trigger signal from sensor 32. If the trigger is received, then the second sensor in sub-system 42 is activated and the system waits for a trigger from the second sensor. If a trigger is received, the system moves to state 506, where the trigger is evaluated to whether it has passed all imposed thresholds, if any. If all thresholds are passed, the system moves to state 508. If all thresholds are not passed, then the system returns to state 504.

In state 508, device 10 waits for a TIMED_REF_CLK clock signal from microprocessor 18. Other activation signals could be used. Once the activation signal is received, the system moves to state 510, the main monitoring state. Here, the state will wait for one of three triggers: (1) receipt of a signal from input device 34; (2) receipt of any time out signal from the monitoring circuit; or (3) receipt of any reset signal, such as a reset signal from a CPU 18. If a signal is from input device 34, the system transits to state 512, otherwise it transits back to state 504. In state 512, a wake-up signal is generated and sent to the system, such as microprocessor 18, so that a transition to higher power level may occur. The system then automatically transits to state 514 where signals are reset. Then the system transits to power down state 502. It will be appreciate that various implementations using techniques known in the art can be used to implement all or parts of the system flow shown in Fig. 5. For example, a combination of hardware, software and firmware elements can implement one or more monitoring and signal generation features described herein. It will further be appreciated that different embodiments may utilize selected certain features of the algorithm shown in Fig. 5. Alternatively, different branches may be provided or additional wait times and threshold steps may be added.

It will be appreciated that with careful selection of motion sensor 32 and input device 34, less power may be drawn by device 10 when it is in low-power mode and is simply waiting for device 10 to be activated, based mostly on signals from low-power sensor 32 instead of higher-power input device 34.

It will further be appreciated that the several layers of filtering of signals generated by PAM 30 ensure that the ultimate wake-up signal 66 is not spurious. This lessens the possibility of awakening microprocessor 18 incorrectly and wasting power for its re-activation.

The present invention is defined by the claims appended hereto, with the foregoing description being merely illustrative of a preferred embodiment of the invention. Those of ordinary skill may envisage certain modifications to the foregoing embodiments which, although not explicitly discussed herein, do not depart from the scope of the invention, as defined by the appended claims.

## Claims

1. An activation circuit for an electronic device (10), comprising:
a first motion sensor (32) which generates a first activation signal upon detection of an initial movement of said device;
a second motion sensor (42) which is activated upon receiving said activation signal from said first motion sensor;
an input device (34);
a monitoring circuit (36) connected to said input device and an output (40) associated with said second motion sensor, said monitoring circuit being arranged to provide power to said input device (34) when said second motion sensor (42) detects a notable movement of said electronic device and to selectively generate a second activation signal (66) used to activate said electronic device (10) to a higher power state after receiving a notable signal from said input device within a predetermined length of time; and
a threshold circuit (46) connected to said second motion sensor to filter insignificant signals produced by said second motion sensor from said monitoring circuit.

2. The activation circuit as claimed in claim 1, further comprising:
a microprocessor (18);
a wake-up software routine (130C) operating on said microprocessor to selectively bring said electronic device to said higher power state upon receipt of said second
activation signal (66); and
a timing module (36, 52) to initiate a timing window after detection of said notable movement.

3. The activation circuit as claimed in claim 1 or claim 2, wherein said monitoring circuit (36) for said input device is arranged to be activated during said timing window and if a sufficient signal from said input device is detected by said monitoring circuit during said timing window and said monitoring circuit is arranged to generate said second activation signal (66).

4. The activation circuit as claimed in claim 2 or claim 3, wherein said monitoring circuit is arranged to provide said second activation signal to an interrupt line of said microprocessor (18) which is associated with said wake-up software routine.

5. The activation circuit as claimed in any one of claims 2 to 4, wherein said microprocessor (18) is arranged to generate a slow clock signal indicating when said microprocessor (18) is in a lower power state.

6. The activation circuit (36) as claimed in any one of claims 1 to 5, wherein said monitoring circuit (36) is arranged to be reset by said second activation signal to allow it to process subsequent signals from said second motion sensor (42).

7. The activation circuit as claimed in any one of claims 1 to 6, wherein said input device (34) is arranged to be activated by a power signal (70) generated by said monitoring circuit (36).

8. The activation circuit as claimed any one of claims 1 to 7, wherein said first motion sensor (32) is a low-g micro-electromechanical system 'MEMS' accelerometer.

9. The activation circuit as claimed in any one of claims 1 to 8, wherein said input device (34) is arranged to detect movement of a finger.

10. The activation circuit as claimed in claim 2 or any one of claims 3 to 9 when dependent on claim 2, wherein if said timing window elapses, said power for said input device is removed.

11. The activation circuit as claimed in claim 10, further comprising an additional input device connected to said monitoring circuit, for providing additional signals to said monitoring circuit for evaluation for generation of said second activation signal.

12. A method for activating an electronic device, comprising:
monitoring for an initial motion of said device utilizing signals from a low-g micro-electromechanical system 'MENS' accelerometer (32);
upon detection of said initial motion, activating a second accelerometer (42), using a signal from said low-g MEMS accelerometer, to detect a further motion;
activating an input device (34) upon detection of said further motion if said further motion surpasses a predefined threshold;
waiting for a notable signal from said input device for a predetermined length of time; and
if said notable signal is received within said predetermined length of time, generating an activation signal (66) for activating said electronic device to a higher power state.

13. The method for activating an electronic device as claimed in claim 12, wherein:
said step of waiting for said notable signal to be received from said input device utilizes a slow clock signal to track said predetermined length of time.

14. The method for activating an electronic device as claimed in claim 12 or claim 13, further comprising:
deactivating said input device if said predetermined length of time elapses without receiving said notable signal from said input device.

15. The method for activating an electronic device as claimed in any one of claims 12 to 14, wherein:
upon generation of said activation signal (66), it is provided to a microprocessor associated with said device; and
said microprocessor reacts to receipt of said activation signal by transiting to a higher power state.

16. An electronic device, comprising
the activation circuit defined in any one of claims 1 to 11.

17. An electronic device, comprising:
a microprocessor;
the activation circuit defined in claim 1 or any of claims 6 to 9 when depending on claim 1;
a wake-up software routine operating on said microprocessor to selectively bring said electronic device to said higher power state upon receipt of said second activation signal (66),
a timing module to initiate a timing window after detection of said notable movement; and
wherein said input device (34) is arranged to be activated during said timing window and if a sufficient input signal is provided on said input device during said timing window, the monitoring circuit is arranged to generate said second activation signal (66).

## Patentansprüche

1. Aktivierungsschaltung für eine Elektronikvorrichtung (10) mit:
einem ersten Bewegungssensor (32), der nach Erfassung einer anfänglichen Bewegung der Vorrichtung ein erstes Aktivierungssignal erzeugt,
einem zweiten Bewegungssensor (42), der nach Empfangen des Aktivierungssignals von dem ersten Bewegungssensor aktiviert wird,
einer Eingabevorrichtung (34),
einer Überwachungsschaltung (36), die mit der Eingabevorrichtung und einer Ausgabe (40) verbunden ist, die mit dem zweiten Bewegungssensor verknüpft ist, wobei die Überwachungsschaltung dazu ausgelegt ist, Leistung bzw. Strom an die Eingabevorrichtung (34) bereitzustellen, wenn der zweite Bewegungssensor (42) eine beträchtliche Bewegung der Elektronikvorrichtung erfasst, und selektiv ein zweites Aktivierungssignal (66) zu erzeugen, das verwendet wird, um die Elektronikvorrichtung (10) nach Empfangen eines beträchtlichen Signals von der Eingabevorrichtung innerhalb einer vorbestimmten Zeitdauer in einen höheren Leistungszustand zu aktivieren, und
eine Schwellenwertschaltung (46), die mit dem zweiten Bewegungssensor verbunden ist, um unwesentliche Signale zu filtern, die von dem zweiten Bewegungssensor von der Überwachungsschaltung produziert werden.

2. Aktivierungsschaltung nach Anspruch 1, ferner mit:
einem Mikroprozessor (18),
einer Aufwachsoftwareroutine (130C), die auf dem Mikroprozessor arbeitet, um nach Empfangen des zweiten Aktivierungssignals (66) die Elektronikvorrichtung selektiv in den höheren Leistungszustand zu bringen, und
einem Timingmodul (36, 52), um nach Erfassen der beträchtlichen Bewegung ein Timingfenster einzuleiten.

3. Aktivierungsschaltung nach Anspruch 1 oder 2, wobei die Überwachungsschaltung (36) für die Eingabevorrichtung dazu ausgelegt ist, während des Timingfensters aktiviert zu werden, und wenn von der Überwachungsschaltung während des Timingfensters ein ausreichendes Signal von der Eingabevorrichtung erfasst wird, die Überwachungsschaltung dazu ausgelegt ist, das zweite Aktivierungssignal (66) zu erzeugen.

4. Aktivierungsschaltung nach Anspruch 2 oder 3, wobei die Überwachungsschaltung dazu ausgelegt ist, das zweite Aktivierungssignal an eine Interruptleitung des Mikroprozessors (18) bereitzustellen, der mit der Aufwachsoftwareroutine verknüpft ist.

5. Aktivierungsschaltung nach einem der Ansprüche 2 bis 4, wobei der Mikroprozessor (18) dazu ausgelegt ist, ein langsames Taktsignal zu erzeugen, das anzeigt, wann der Mikroprozessor (18) in einem Geringleistungs-Zustand ist.

6. Aktivierungsschaltung (36) nach einem der Ansprüche 1 bis 5, wobei die Überwachungsschaltung (36) dazu ausgelegt ist, von dem zweiten Aktivierungssignal zurückgesetzt zu werden, um ihr zu erlauben, darauffolgende Signale von dem zweiten Bewegungssensor (42) zu verarbeiten.

7. Aktivierungsschaltung nach einem der Ansprüche 1 bis 6, wobei die Eingabevorrichtung (34) dazu ausgelegt ist, von einem Leistungssignal (70) aktiviert zu werden, das von der Überwachungsschaltung (36) erzeugt ist.

8. Aktivierungsschaltung nach einem der Ansprüche 1 bis 7, wobei der erste Bewegungssensor (32) ein Niedrig-g-Mikro-Elektromechanik-System-, 'MEMS'-, Beschleunigungsmesser ist.

9. Aktivierungsschaltung nach einem der Ansprüche 1 bis 8, wobei die Eingabevorrichtung (34) dazu ausgelegt ist, eine Bewegung eines Fingers zu erfassen.

10. Aktivierungsschaltung nach Anspruch 2 oder einem der Ansprüche 3 bis 9, wenn von Anspruch 2 abhängig, wobei, wenn das Timingfenster abläuft, die Leistung bzw. der Strom für die Eingabevorrichtung entfernt wird.

11. Aktivierungsschaltung nach Anspruch 10, ferner mit einer zusätzlichen Eingabevorrichtung, die mit der Überwachungsschaltung verbunden ist, zum Bereitstellen zusätzlicher Signale an die Überwachungsschaltung für eine Evaluierung für eine Erzeugung des zweiten Aktivierungssignals.

12. Verfahren zum Aktivieren einer Elektronikvorrichtung mit:
Überwachen hinsichtlich einer anfänglichen Bewegung der Vorrichtung unter Nutzung von Signalen von einem Niedrig-g-Mikro-Elekromechanik-System-, 'MEMS'-, Beschleunigungsmesser (32),
nach Erfassung der anfänglichen Bewegung, Aktivieren eines zweiten Beschleunigungsmessers (42) unter Verwendung eines Signals von dem Niedrig-g-MEMS-Beschleunigungsmesser, um eine weitere Bewegung zu erfassen,
Aktivieren einer Eingabevorrichtung (34) nach Erfassung der weiteren Bewegung, wenn die weitere Bewegung einen im Voraus festgelegten Schwellenwert überschreitet,
Warten auf ein beträchtliches Signal von der Eingabevorrichtung während einer vorbestimmten Zeitdauer, und
wenn das beträchtliche Signal in der vorbestimmten Zeitdauer empfangen wird, Erzeugen eines Aktivierungssignals (66) zum Aktivieren der Elektronikvorrichtung in einen höheren Leistungszustand.

13. Verfahren zum Aktivieren einer Elektronikvorrichtung nach Anspruch 12, wobei:
der Schritt des Wartens auf das von der Eingabevorrichtung zu empfangende beträchtliche Signal ein langsames Taktsignal benutzt, um die vorbestimmte Zeitdauer verfolgen.

14. Verfahren zum Aktivieren einer Elektronikvorrichtung nach Anspruch 12 oder 13, ferner mit:
Deaktivieren der Eingabevorrichtung, wenn die vorbestimmte Zeitdauer ohne Empfangen des beträchtlichen Signals von der Eingabevorrichtung abläuft.

15. Verfahren zum Aktivieren einer Elektronikvorrichtung nach einem der Ansprüche 12 bis 14, wobei:
nach Erzeugung des Aktivierungssignals (66) es an einen Mikroprozessor bereitgestellt wird, der mit der Vorrichtung verknüpft ist, und
der Mikroprozessor auf ein Empfangen des Aktivierungssignals mit einem Übergehen in einen höheren Leistungszustand reagiert.

16. Elektronikvorrichtung mit:
der Aktivierungsschaltung nach einem der Ansprüche 1 bis 11.

17. Elektronikvorrichtung mit:
einem Mikroprozessor,
der Aktivierungsschaltung nach Anspruch 1 oder nach einem der Ansprüche 6 bis 9, wenn von Anspruch 1 abhängig,
einer Aufwachsoftwareroutine, die auf dem Mikroprozessor arbeitet, um nach Empfangen des zweiten Aktivierungssignals (66) selektiv die Elektronikvorrichtung in den höheren Leistungszustand zu bringen,
einem Timingmodul, um nach Erfassen der beträchtlichen Bewegung ein Timingfenster einzuleiten,
wobei die Eingabevorrichtung (34) dazu ausgelegt ist, während des Timingfensters aktiviert zu werden, und wenn während des Timingfensters ein ausreichendes Eingabesignal auf der Eingabevorrichtung bereitgestellt wird, die Überwachungsschaltung dazu ausgelegt ist, das zweite Aktivierungssignal (66) zu erzeugen.

## Revendications

1. Circuit d'activation pour un dispositif électronique (10), comprenant :
un premier capteur de mouvement (32), qui génère un premier signal d'activation lors de la détection d'un mouvement initial dudit dispositif :
un deuxième capteur de mouvement (42), qui est activé lors de la réception dudit signal d'activation venant dudit premier capteur de mouvement ;
un dispositif d'entrée (34) ;
un circuit de contrôle (36) connecté audit dispositif d'entrée et à une sortie (40) associée audit deuxième capteur de mouvement, ledit circuit de contrôle étant conçu pour délivrer une alimentation audit dispositif d'entrée (34) lorsque ledit deuxième capteur de mouvement (42) détecte un mouvement décelable dudit dispositif électronique et pour générer de façon sélective un deuxième signal d'activation (66) utilisé pour activer ledit dispositif électronique (10) vers un état de puissance plus élevée après la réception d'un signal décelable à partir dudit dispositif d'entrée à l'intérieur d'une longueur de temps prédéterminée ; et
un circuit de seuil (46) connecté audit deuxième capteur de mouvement de façon à filtrer des signaux insignifiants produits par ledit deuxième capteur de mouvement à partir dudit circuit de contrôle.

2. Circuit d'activation selon la revendication 1, comprenant de plus :
un microprocesseur (18) ;
un sous-programme de logiciel d'éveil (130C) fonctionnant sur ledit microprocesseur afin d'amener de façon sélective ledit dispositif électronique audit état de puissance plus élevée lors de la réception dudit deuxième signal d'activation (66) ; et
un module de minutage (36, 52) pour déclencher une fenêtre de minutage après la détection dudit mouvement décelable.

3. Circuit d'activation selon la revendication 1 ou la revendication 2, dans lequel ledit circuit de contrôle (36) pour ledit dispositif d'entrée est conçu pour être activé durant ladite fenêtre de minutage et si un signal suffisant à partir dudit dispositif d'entrée est détecté par ledit circuit de contrôle durant ladite fenêtre de minutage, et ledit circuit de minutage est conçu pour générer ledit deuxième signal d'activation (66).

4. Circuit d'activation selon la revendication 2 ou la revendication 3, dans lequel ledit circuit de contrôle est conçu pour délivrer ledit deuxième signal d'activation à une ligne d'interruption dudit microprocesseur (18) qui est associée audit sous-programme de logiciel d'éveil.

5. Circuit d'activation selon l'une quelconque des revendications 2 à 4, dans lequel ledit microprocesseur (18) est conçu pour générer un signal d'horloge lente indiquant quand ledit microprocesseur (18) est dans un état de puissance plus faible.

6. Circuit d'activation (36) selon l'une quelconque des revendications 1 à 5, dans lequel ledit circuit de contrôle (36) est conçu pour être remis à zéro par ledit deuxième signal d'activation de façon à lui permettre de traiter des signaux suivants venant dudit deuxième capteur de mouvement (42).

7. Circuit d'activation selon l'une quelconque des revendications 1 à 6, dans lequel ledit dispositif d'entrée (34) est conçu pour être activé par un signal de puissance (70) généré par ledit circuit de contrôle.

8. Circuit d'activation selon l'une quelconque des revendications 1 à 7, dans lequel ledit premier capteur de mouvement (32) est un accéléromètre à système micro-électro-mécanique "MEMS" à faible g.

9. Circuit d'activation selon l'une quelconque des revendications 1 à 8, dans lequel ledit dispositif d'entrée (34) est conçu pour détecter le mouvement d'un doigt.

10. Circuit d'activation selon la revendication 2 ou l'une quelconque des revendications 3 à 9 lorsqu'elles dépendent de la revendication 2, dans lequel, si ladite fenêtre de minutage s'achève, ladite alimentation pour ledit dispositif d'entrée est interrompue.

11. Circuit d'activation selon la revendication 10, comprenant de plus un dispositif d'entrée additionnel connecté audit circuit de contrôle, pour délivrer des signaux additionnels audit circuit de contrôle pour l'évaluation pour la génération dudit deuxième signal d'activation.

12. Procédé pour activer un dispositif électronique, comprenant :
le contrôle d'un mouvement initial dudit dispositif à l'aide de signaux venant d'un accéléromètre à système micro-électro-mécanique "MEMS" à faible g (32) ;
lors de la détection dudit mouvement initial, l'activation d'un deuxième accéléromètre (42) à l'aide d'un signal venant dudit accéléromètre à système micro-électro-mécanique à faible g, afin de détecter un autre mouvement ;
l'activation d'un dispositif d'entrée (34) lors de la détection dudit autre mouvement si ledit autre mouvement dépasse un seuil prédéfini ;
l'attente d'un signal décelable à partir dudit dispositif d'entrée pendant une longueur de temps prédéterminée ; et
si ledit signal décelable est reçu à l'intérieur de ladite longueur de temps prédéterminée, la génération d'un signal d'activation (66) pour activer ledit dispositif électronique à un état de puissance plus élevée.

13. Procédé pour activer un dispositif électronique selon la revendication 12, dans lequel :
ladite étape d'attente dudit signal décelable devant être reçu à partir dudit dispositif d'entrée utilise un signal d'horloge lente pour suivre ladite longueur de temps prédéterminée.

14. Procédé pour activer un dispositif électronique selon la revendication 12 ou la revendication 13, comprenant de plus :
la désactivation dudit dispositif d'entrée si ladite longueur de temps prédéterminée s'achève sans recevoir ledit signal décelable à partir dudit dispositif d'entrée.

15. Procédé pour activer un dispositif électronique selon l'une quelconque des revendications 12 à 14, dans lequel :
lors de la génération dudit signal d'activation (66), il est délivré à un microprocesseur associé audit dispositif ; et
ledit microprocesseur réagit à la réception dudit signal d'activation par la transition vers un état de puissance plus élevée.

16. Dispositif électronique, comprenant le circuit d'activation selon l'une quelconque des revendications 1 à 11.

17. Dispositif électronique, comprenant :
un microprocesseur ;
le circuit d'activation selon la revendication 1 ou l'une quelconque des revendications 6 à 9 lorsqu'elles dépendent de la revendication 1 ;
un sous-programme de logiciel d'éveil fonctionnant sur ledit microprocesseur de façon à amener de façon sélective ledit dispositif électronique audit état de puissance plus élevée lors de la réception dudit deuxième signal d'activation (66) ;
un module de minutage pour déclencher une fenêtre de minutage après la détection dudit mouvement décelable ; et
dans lequel ledit dispositif d'entrée (34) est conçu pour être activé durant ladite fenêtre de minutage et si un signal d'entrée suffisant est délivré sur ledit dispositif d'entrée durant ladite fenêtre de minutage, et le circuit de contrôle est conçu pour générer ledit deuxième signal d'activation (66).
